(19) **Europäisches Patentamt European Patent Office Office européen des brevets**

(11) **EP 4 410 579 B1**

(12) **EUROPEAN PATENT SPECIFICATION**

(45) Date of publication and mention
of the grant of the patent:
**24.12.2025 Bulletin 2025/52**

(21) Application number: **23154369.5**

(22) Date of filing: **01.02.2023**

(51) International Patent Classification (IPC):
**B60K 1/04** $^{(2019.01)}$

(52) Cooperative Patent Classification (CPC):
**B60K 1/04; B60K 2001/0438; B60Y 2306/01**

(54) **LATERAL ENERGY ABSORBING SYSTEM FOR ELECTRIC DRIVE VEHICLES**

SEITLICHES ENERGIEABSORPTIONSSYSTEM FÜR FAHRZEUGE MIT ELEKTROANTRIEB

SYSTÈME D'ABSORPTION D'ÉNERGIE LATÉRALE POUR VÉHICULES À PROPULSION ÉLECTRIQUE

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(43) Date of publication of application:
**07.08.2024 Bulletin 2024/32**

(73) Proprietor: **Outokumpu Oyj**
**00180 Helsinki (FI)**

(72) Inventors:
• **Fröhlich, Thomas**
**40878 RATINGEN (DE)**
• **Lindner, Stefan**
**47877 WILLICH (DE)**

(56) References cited:
CN-A- 109 088 026     US-A1- 2015 239 331
US-A1- 2016 257 346     US-A1- 2019 047 628
US-A1- 2020 262 491     US-B2- 10 899 389

**Description**

FIELD OF THE INVENTION

The present invention relates to an energy absorbing system (EAS) for protecting a storage unit in electric drive vehicles.

BACKGROUND

For the field of road vehicles, sideways collisions present a special challenge that supporting active safety systems like restraint systems are not able to be implemented because of the local closeness to the side-impact area (e.g. door or b-pillar). The common way of construction is to increase the car stiffness in this area by using higher strength materials. The topic of electric drive vehicle safety is an essential design aspect, especially the safe integration of the battery compartment including the battery cells. As the battery compartment in most state-of-the-art cases extends over the complete underfloor of the vehicle, side impact safety becomes more challenging as the lateral deformation space (also called crumplezone, crush zone or intrusion path) for absorbing the crash energy decreases in electric drive vehicles. Consequences in case of a critical intrusion into the storage unit could be damage of the vehicle batteries with consequent spontaneous combustion (self-ignition), short-circuit hazard, leakage of battery fluid and the loss of functionality (costs, effort for repair or change).

In general, electric drive vehicles use an electric drive combined with entrained energy storage as a drive concept. Depending on the respective drive concept, electric drive vehicles can be divided into Battery Electric Vehicles (BEV) using purely electric power, Hybrid Electric Vehicles (HEV), Plug-in Hybrid Electric Vehicles (PHEVs) or Range Extended Electric Vehicles (REEV) combining an electric engine with combustion motor. Also Fuell Cell Vehicles (FCV) or Fuel Cell Hybrid Vehicles (FCHV) where chemical energy stored in the form of hydrogen is changed into electrical energy is one additonal group of electric drive vehicles. As an energy storage unit a battery compartment including high-voltage batteries (accumulators) like lithium ion batteries interconnected to modules or in the case of fuel cells, hydrogen storage tanks are used.

An example of a battery housing is described in European patent publication 2565958B1 where only the battery housing (compartment) is shown without any crash or impact protection. The DE patent application 102009035492A1 and US patent application 2016068195A1 describe a crash cross member integrated into a battery housing arranged into the transverse vehicle direction as a side impact protection for batteries. The international patent application publication WO 2017012850A1 describes a battery arrangement where a stiffening element connects different battery segments with each other to increase the side impact strength. The US patent application publication US 2015239331A1 describes a system for absorbing and distributing the side impact energy utilizing an integrated battery pack. The way to absorb the side impact crash energy is executed by using side sills with multiple longitudinal channels. Lumens in the profile create a distance between battery pack and battery bottom panel. The US patent application publication US 2017029034A1 describes a battery assembly where shear pins or other deformable connectors secure edge reinforcements of a tray. The US patent application 2016233468A1 describes a battery enclosure which is surrounded by internally reinforced cylindrical impact absorbing elements. Further the US patent application publication US 2016229308A1 describes a battery housing which is protected by T-shaped guides on the outer surface for stiffeners and absorbing elements. The Chinese patent application publication CN 111845602A discloses a protection assembly comprisinga vertical plate, a reinforcing plate and a supporting plate whereby a connecting area to a longitudinal beam is attached. The international patent application publication WO 2021004497A1 describes a vehicle body structure suitable against side collision which is set together by a crossbeam with a longitudinal beam and b-pillar on each longitudinal side. Some further examples are known from Chinese patent applications 211617626U and CN211621342U. Chinese patent application CN 111725456A describes an anti-collision reinforcing structure for a battery pack and comprises a protection box working against an impact. US patent application 2019047628A1 describes a side portion structure where a pair of rockers is arranged at each of both lateral outer sides and fixed with cross members between them. A battery housing is located in the space between the pair of rockers Especially regarding side-impact for battery electric vehicles where a battery pack located in the underfloor and needs to be protected is described in the US patent application 2016257346A1. The lateral protection was set together by the general vehicle rocker and a specific battery rocker which supports the energy absorption in case of a side-impact. Further examples are in US patent applications 9868361B2 and 2020262491A1.

SUMMARY OF THE INVENTION

The object of the present invention is to eliminate at least some of the drawbacks of known systems used for protecting a storage unit and to provide an energy absorbing system (EAS) for such electric drive vehicles.

Then purpose of the energy absorbing system is to protect the storage unit of a powertrain primarily against a side impact into the longitudinal side of the vehicle whereby also the not-directly affected opposite side of the impact is an active part of the whole energy absorbing system (EAS).

Thus, the present invention relates to an energy absorbing system (EAS) for an electric drive vehicle. In particular the invention relates to an EAS that protects a storage unit of an alternative powertrain against a side impact into the longitudinal side of a vehicle by absorbing energy from both the impacted side and from the not-directly affected opposite side.

The invention is defined by what is disclosed in the independent claim. Preferable embodiments are set out in the dependent claims.

DETAILED DESCRIPTION

In accordance with the objective of the present invention, an Energy absorbing system (EAS) of an electric drive vehicle is located related to vehicle's crosswise direction between both lateral rocker panels, the first rocker panel and the second rocker panel of a vehicle body. The energy absorbing system comprises elements joining the rocker panels. The rocker panels are the side impact panels or other structures in the vehicle constructed to receive a side impact if such occurs. The joint is preferably a T-joint, but the joining method and construction of it can be freely changed as a choice of design. In case of a side-impact, deformation energy is lead from the rocker panel affected into the load path elements of the EAS. The EAS itself surrounds a storage unit of an alternative powertrain, for example a battery compartment or another arrangement including battery modules or battery cells. In general, the EAS creates a load path that defines the way the impact force takes during a crash through the system, e.g. a complete car body or specific assembly units. The focus is on protection of the storage unit of an alternative powertrain like the battery compartment or the hydrogen storage tank. One feature of the present invention is, that there exist no load path through the storage unit itself. The EAS adsorbs the impact and directs it around the storage unit to completely protect the storage unit and keeps it as a closed clean space from environmental conditions and to avoid any critical deformation into the storage unit. For leading the impact force in case of a crash around the storage unit, load path elements are used and set together with energy absorbing areas on both outer sides of the storage unit. A stiff rigid bar element is placed in the middle so that it extends around the outer boundaries or walls of the storage unit.

The load path elements of the EAS bypass the storage unit horizontally in another level that the upper or lower height of the storage unit related to vehicles vertical axis (z-axis), preferably as a two-way system both above and below the storage unit. Usually, the height available in the vehicle's underbody is limited as there must be some free safety space to the road, the storage unit itself requires space and the position of the passengers travelling in the vehicle should not be too high. In the case that the usable space into the direction of the vertical axis is limited, which depends on the vehicle model and only the positioning of one load path level is feasible, the location above the storage unit is preferred. This sets the absorption height close in relation to the height of a potential impact and further supports the car body in protecting the passengers. The storage unit is in point of vehicles cross direction (x-axis) positioned in the center between both lateral rocker panels. The storage unit is configured to be moveable in cross direction of the vehicle and it is not fixed with the vehicle underbody and is only guided by the EAS as a kind of a floating bearing. The EAS as well as the storage unit is not rigidly connected in vertical axis with other vehicle parts to allow a defined displacement into the averted longitudinal side of the vehicle which is not affected by the lateral impact. The displacement can be defined by spring characteristics of the elements.

The EAS is set together by several load path elements whereby one load path element per battery module (which is inside the storage unit) is preferred into longitudinal direction of the vehicle. This leads to a distance of 150 - 190 mm between each load path element. That distance gives also the outer rocker panels a sufficient support to lead the impacting energy into the EAS load path elements and to avoid the possibility that an impacting sharp-pointed object causes the rocker panel to locally collapse without an adequate EAS support. The load path elements of the EAS are set together by energy absorbing areas to both outer sides where the connection to the rocker panels is located and a stiff rigid, so called movable bar element in the middle having at least a length that has the same dimension as the storage unit in cross direction of the vehicle. Energy absorbing areas are formed on each side of the storage unit between the unit and the rocker panel. The energy absorbing elements extending over the space between the rocker panel and the storage unit are used to form the energy absorbing areas. The energy absorbing elements are fixedly connected with a stiff rigid movable bar element by a guiding element which function as a guiding element for the storage unit into the cross direction of the vehicle. The guiding element is configured to allow movement in the crosswise direction of the vehicle and to restrict the movement in the lengthwise direction of the vehicle to aviod undesired movement during driving but to fix the storage unit unmovable to the car body.

Thereby, the energy absorbing areas at both outer sides of one load path element work like a compression spring, in more details as a serial connection of two compression springs interrupted into their working direction (x-axis) only by the guiding elements and the movable bar. On the contrary, the movable bar, being a stiff rigid bar element in the middle of one load path element works like a block in spring system and represents a safety area limiting or preventing deformation to fully protect the battery compartment in vehicles cross direction. Therefore, every load path element of the EAS works into vehicles cross direction like a combined spring system whereas the energy absorbing areas work like a compression spring and the stiff rigid movable bar element works like a block in a spring.

The mentioned way of construction for the energy absorbing areas can be described by the physical effect of a compression spring with its adjustable spring characteristic or spring rate. The spring rate, also called spring stiffness or spring hardness, defines the ratio of a force which affects on the spring and the therefore induced displacement of the spring. The spring rate D as an SI-unit can be calculated by using the formula (1):

$$D = F / \Delta L = (E * A) / L0 \text{ with the physical unit } N{\cdot}m{-}1 = kg{\cdot}s{-}2 \quad (1)$$

Thereby F [kN] is the compressive force or here more detailed the impact force into vehicles longitudinal side which is transferred by the lateral rocker panel into the EAS, $\Delta L$ [mm] is in general the spring deflection and in this case the complete contraction of both cooperating energy absorbing areas of one load path element before reaching the block length for the whole load path element, E is the material-depending Young's modulus [$N/m^2$], A is the cross-sectional area of the spring (system) and L0 is the initial length of a spring system and in more detail for the case of the present invention the length of both energy absorbing areas ($L0 = L0_L + L0_R$) in vehicles cross direction in initial state. To realize an uniform safety into both vehicle cross sides, the spring characteristics of both energy absorbing areas of a load path element should be identical what results in the behavior mentioned by formula (2):

$$\Delta L_L = \Delta L_R = \Delta L / 2 \quad (2),$$

whereby the indices L and R stands for the left and the right energy absorbing area of one load path element.

The impact of an intruding object into vehicles longitudinal side can be absorbed depending on the specific vehicle construction in a linear, progressive or degressive spring rate. A linear spring rate corresponds to a constant strength level of the surrounding parts. A non-linear degressive spring characteristic corresponds to a decrease of strength towards the cross ends of EAS, steadily or discontinuously depending on the vehicle construction. In this case the energy is absorbed firstly and at the end a high resistance against the impact is created. Conversely a degressive spring characteristic can be used if initially a high resistance is desired and then the energy will be absorbed within the surrounding parts. The described spring effect for the energy absorbing areas can be set-up in a parallel arrangement to reach the best combination of stiffness and energy absorption. With a view on complexity and manufacturing costs, the preferred embodiment of the present invention is a linear spring rate of the energy absorbing areas what would enable the usage of one material for all parts of the energy absorbing areas. To realize an uniform safety into both vehicle cross sides, the spring rate should be equal for the left and the right energy absorbing area of one load path element. In point of the best possible crash behavior, the preferred embodiment of the present invention would be a design of a non-linear degressive spring characteristic for the energy absorbing areas so that the shock impact on the battery cells is decreased what itself limits the danger of batteries spontaneous combustion, a short-circuit hazard, or the loss of functionality which also relates to additional life-time cost.

One other parameter to describe the behavior of the energy absorbing areas during a lateral impact is the spring deflection which is described for a compressive (spiral) spring as the way the spring can cover from the initial unloaded state up to the state where winding upon winding is located. The end state is called block length. The spring deflection can be interpreted as the maximum intrusion level of the energy absorbing areas and depends on the usable package into vehicles cross direction. The higher the spring deflection, the higher is the energy absorption and the lower the forces and accelerations on the storage unit but also on the passengers. As a particularly favorable spring characteristic design for the present invention, a conical helical compression spring or a system with the same operating principle can be mentioned with the advantage of a defined block length in combination with a low package need and a high energy absorption potential (low spring rate). As a preferred embodiment of the present invention, and to enable a sufficient energy absorption of the whole system, the resulting absorbing length $\Delta L$ should be for a typcial passenger vehicle of 1.5 t weight in a ratio between 300 - 500 mm, evenly distributed to both energy absorbing areas of one load path element by having the same spring rate D. In the case the length of the energy absorbing areas limit the available space for the battery cells, the battery cells could be arranged about each other in vehicles height direction. That arrangement leads over to another possible embodiment of the present invention. In the case, an additional load path in vehicles cross direction is necessary to protect the battery cells which are stored about each other, storage unit, e.g. the battery compartment or a hydrogen storage tank, can be separated into two compartments, each of which are completely closed. That enables three potential load paths for the EAS in vehicles cross direction: Beside the ones above and below all storage units, there could be arranged one further load path between both separately closed storage units. Such an additional load path between two separated storage units should be not necessary if the vertical distance $L_V$ between two levels of load path elements are < 250 mm, but should be strived if $L_V$ > 500 mm.

As a side-effect that also the not-directly affected opposite side of the impact is now an active part of the whole energy absorbing system, the shock impact on the battery cells decreases what increases the shock resistance for the whole system (shock absorber) and therefore limits the danger of batteries self-ignition, spontaneous combustion, short-circuit hazard, or the loss of functionality which also relates to additional life-time costs, effort for repair or changer and end-customer satisfaction. This shock absorbing behavior could be further supported with a degressive spring rate design.

Because of the arrangement that the load path elements of the EAS pass above the storage unit related to vehicles height axis (z-axis), there exist additional space between the different load paths elements of the EAS above the storage unit which can be used as a further heat protection space in case of a battery cell self-ignition or spontaneous combustion. The temperature distribution will be significantly delayed by the thermal conductio through the air in this space. If necessary, additional heat protection elements in solid or liquid form could be integrated into this space.

To further support the design of a moveable storage unit related to vehicles cross direction where the EAS guided the displacement of the storage unit and enable an energy absorption also from the not-directly affected opposite side of the lateral crash, the lateral rocker panels are designed as a further embodiment of the present invention as console supports which are orientated into the center of the vehicle. A console support design of the rocker panels braces the EAS as well as the storage unit and support on the one side in holding the weight force of the in vehicles cross direction moveable storage unit and on the other side enables an additional guide along vehicles cross direction. The console supports of both vehicle sides can be connected with an overlying sheet, called underbody protection sheet, so that the storage unit with its weight is laid up like in a storage tray so that a movement into vehicles vertical axis is inhibited, while the storage unit is guided by a possible movement into vehicles cross direction by the EAS. To complete the view on possible degree of freedoms for a movement of the storage unit, a movement into the longitudinal vehicle direction can be avoided by cross members or reinforcing elements, surrounding the storage unit without a rigid connection in the longitudinal vehicle axis. The overlaying sheet connected with the console supports could be designed at the same time with imprints like corrugations to take the function of an underbody protection sheet against an underbody intrusion at the same time.

If the stiffness of the whole vehicle or the load cases makes it necessary to stiffen the EAS, longitudinal members could be additionally added to the EAS. The arrangement of the longitudinal members should be designed in the area of the stiff rigid bar elements with which they can be fixed joint, preferably by welding. To avoid a buckling according to Euler (Euler's buckling cases, avoid exceeding critical collapse load), two levels of longitudinal members should be integrated as a preferred case. Otherwise also just one centered longitudinal member fulfilling the load cases according to Euler could be integrated whereby a higher thickness and bigger dimensions of the stiff rigid movable bar element are needed what limits the package.

The mentioned embodiments of the present invention for the energy absorbing areas can be carried out by stainless-steel compression springs, preferably stainless-steel springs with a degressive spring rate. Beside spiral springs also conical springs, laminated springs, wave springs, flat springs or cup springs fulfill the described behavior of present invention. Thereby, also all other kinds of profiles manufactured out of flat sheets by bending, deep-drawing, or internal high-pressure forming are also suitable to lower the weight and manufacturing efforts of the EAS related to the usage of conventional springs. One preferred solution is a crumble box typically used to protect the vehicle against front and rear collisions and which folds in a defined way to absorb the energy.

As a preferably used material of the present invention corrosion-resistant stainless steels, more preferably austenitic stainless steels with significant strain hardening effects and their high elongation and good ductility, are used for manufacturing the EAS. The group of stainless steels demonstrates increasing possibilities for the method of the present invention: Their heat-, acid and corrosion resistance expanded the EAS with additionally benefits, increases life-time durability as well as after-lifes sustainability (fully recycable) and protect with their mechanical and physical properties the storage unit but also the passengers. Furthermore manufacturing costs are decreased with an increase of sustainability at the same time as no painting or additional surface coating is necessary due to their natrual high and repassivating corrosion-resistance which allows the usage of these materials in the corrosive demanding underbody area where the EAS is located. The usage of stainless steel avoids potential corrosion issues in this underbody area with an aggressive environmental conditon due to potential splash water and its de-icing salt content as well as potential stone chipping danger. Further, a rework during EAS life-time by using stainless steels could be avoided and the life-time increases. At the end of the EAS life-time, the complete stainless steel EAS can be 100 % recycled in the existing scrap routes and supplied to electric arc furnaces for the next material life-cycle.

To be more precise, the energy absorbing areas of the EAS are manufactured with highly ductile stainless steels, preferably with austenitic stainless steels in annealed condition due to their high elongation $A_{80} \geq 45$ % and the related high toughness and high energy absorption capacity. Due to the TRIP, TWIP or TRIP/TWIP hardening mechanism of the austenitic stainless steels, the energy absorbing areas will continuously harden during an impact what result and support in a degressive spring rate behavior. It is preferred that the stiff rigid movable bar element in the middle of one load path element is manufactured with corrosion-resistant high-strength stainless steel, preferably with a temper-rolled or strain-hardened austenitic stainless steel having a yield strength level according to EN 10088-2 equal or higher than +CP500 to avoid any deformation for the rigid bar itself what directly correlates with no deformation of the storage unit.

Another preferred material for the movable bar element is represented by the group of press-hardenable, or also called hot-formable, boron-manganese alloyed steels like 22MnB5 which can be hardened during hot-forming to tensile strength levels between 1250 - 2200 MPa. On the same way of heat-treatment the martensitic stainless steels like 1.4034 are suitable to create mechanical properties with Rp0.2 $\geq$ 1200 MPa as well as Rm $\geq$ 1800 MPa and therefore to reach the target of a high stiffness, non-deformable rigid bar element. Independent what metal material is used for one load path element, it is necessary to separate the stiff rigid movable bar element and the surrounding energy absorbing areas in point of their yield strength to enable the wished function of both parts of the EAS: To absorb the energy with the energy absorbing areas and to be non-deformable with the stiff rigid movable bar element. Therefore, the yield strength ratio $\Delta R_{P0.2}$ between the materials used for the stiff rigid bar element and the energy absorbing areas should be $\geq$ 2.0, more preferably between $2.5 \leq r_{RP0.2} \leq 3.5$.

In the case of the present invention storage unit of an alternative powertrain means the battery cells, battery modules and battery compartments of Battery Electric Vehicles (BEV) or Hybrid Electric Vehicles (HEV) or the hydrogen storage tank of Fuel Cell Vehicles (FCV) or Fuel Cell Hybrid Vehicles (FCHV).

The present invention also works for other types of electric passenger or goods transport vehicles like busses, people mover, commercial vehicles or parcel delivery with scaling of the dimensions and adjustment of the spring characteristics. Further the present invention is adaptable to other kinds of transport systems where passengers and the energy sources must be protected together like an autonomous driven car, a taxi, small busses or vans.

BRIEF DESCRIPTION OF THE DRAWINGS

The present invention is illustrated in more detail referring to the attached 8 drawings where

Fig. 1 shows a schematic view of the EAS between the lateral rocker panels and with the inner storage unit as a side view.
Fig. 2 shows a schematic view of the fixed joining points of the EAS as a side view.
Fig. 3 shows a schematic view of the EAS between the lateral rocker panels and with the inner storage unit as a top view.
Fig. 4 shows a schematic view of the EAS between the lateral rocker panels and with the inner storage unit as a side view during a lateral impact situation.
Fig. 5 shows a schematic view of the EAS with two seperated storage units as a side view.
Fig. 6 shows a schematic view of the EAS where the rocker panels are designed with console supports as a side view.
Fig. 7 shows a schematic view of the EAS where the energy absorbing areas are designed as folding crumble boxes as a side view.
Fig. 8 shows a schematic view of the EAS with additional longitudinal members as a top view.

EMBODIMENTS ILLUSTRATING THE INVENTION

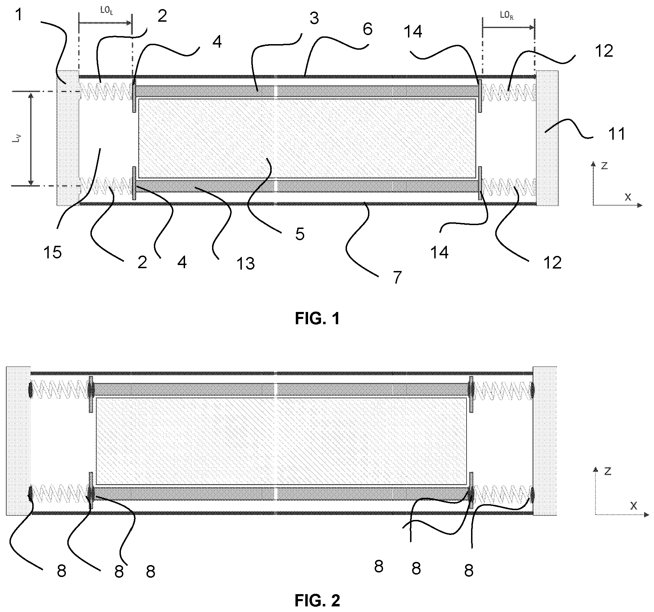

Fig. 1 illustrates as a side view the initial manufactured configuration without effects of an impact. The EAS is located between the storage unit 5 and both lateral rocker panels 1, 11 and set together by load path elements. Every load path element is set together by energy absorbing areas 2, 12 composed of a space 15 between the storage unit 5 and the rocker panels 1, 11 on each side of it and energy absorbing elements 2, 12 placed in that space 15. The energy absorbing elements 2, 12 are connected to the rocker panels 1, 11 on both outer sides and to a stiff rigid bar element forming a movable bar 3 in the middle. Guiding elements 4, 14 are set between each energy absorbing element 2 and the movable bar 3. The EAS bypasses the storage unit 5 which is arranged in the center. The storage unit 5 is not fixed on its position and is therefore moveable in vehicles cross direction. There is no load path going through the storage unit 5 in the cross direction of the vehicle. In this example, there are load path elements under the storage unit 5 and under it. $L_V$ describes the distance between two load path elements related to vehicles height axis (z-axis). $L0_L$ (left) and $L0_R$ (right) describes the spring deflection of each energy absorbing area. The rocker panels 1, 11 could be joint by an underbody sheet (6) and closed to the ground by an underbody protection sheet 7.

Fig. 2 illustrates the fixed joining points (8) of the EAS whereby on each vehicle side the energy absorbing elements 2, 12 are joint with the rocker panels 1, 11 and the guiding elements 4, 14. The guiding elements 4, 14 are further fixly joined with a movable bar 3. There preferably exist no further rigid joints in the EAS with other vehicle parts, especially not in direction of the vertical axis to enable the movement into vehicles cross direction (x-axis). The guiding elements 4, 14 make the storage unit to follows the movement of the movable bar 3 so that the storage unit is protected by this stiff and rigid movable bar element. The movable bar 4 and the guiding elements may be any elements that are rigid in relation to the energy absorbing elements 2, for example profiles or tubes. The fixed joining points could be weld spots, e.g. by resistance spot welding, but also a simple groove notch combination or any conventional construction element.

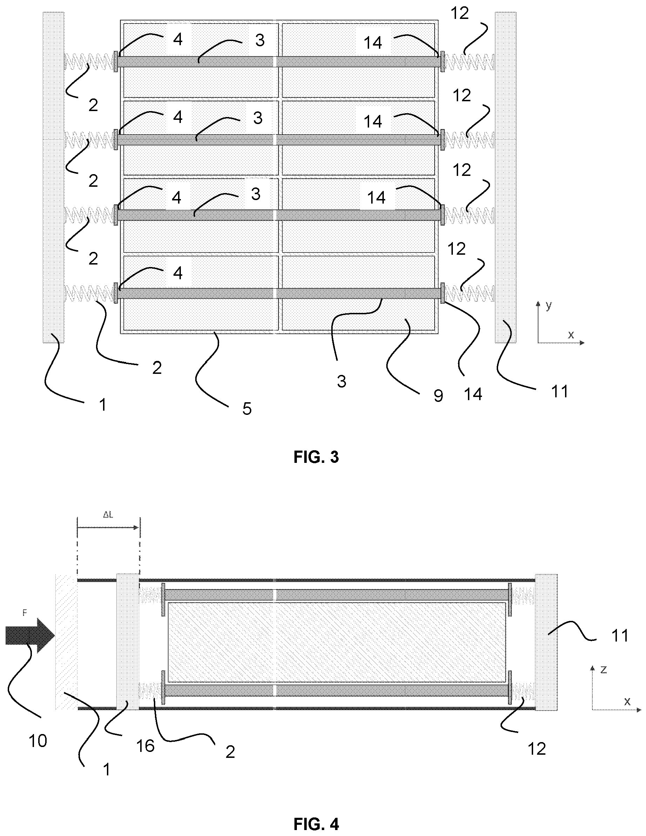

Fig. 3 illustrates as a top view the initial configuration without an impact and the arrangement of the different load path elements into vehicles longitudinal direction (y-axis). In this example the number of load path elements is 4. The figure further illustrates the arrangement of the battery modules (9) inside the storage unit (5) and the therefore related number of load path elements (one load path element per battery module) and their distance to each other (150 - 190 mm).

Fig. 4 illustrates as a side view the behavior of the EAS during a lateral impact with the impacting force F 10. The direct-affected rocker panel 1 is pushed along the vehicles cross direction (x-axis) to an impacted position 16 whereby the energy absorbing areas on each side absorb the impacting energy by compressing the energy absorbing elements 2, 12 and enable therefore the movement of the storage unit 5 along the vehicles cross direction (x-axis). ΔL describes the complete contraction of both cooperating energy absorbing areas before reaching their block length for the whole load path element. This FIGURE 4 illustrates clearly that the strorage unit 5 is protected by compressive elements on both sides and contact to a rigid destrictive construction is avoided. Further, absorption of the energy is enhanced by double compression of the doubled absorbing elements.

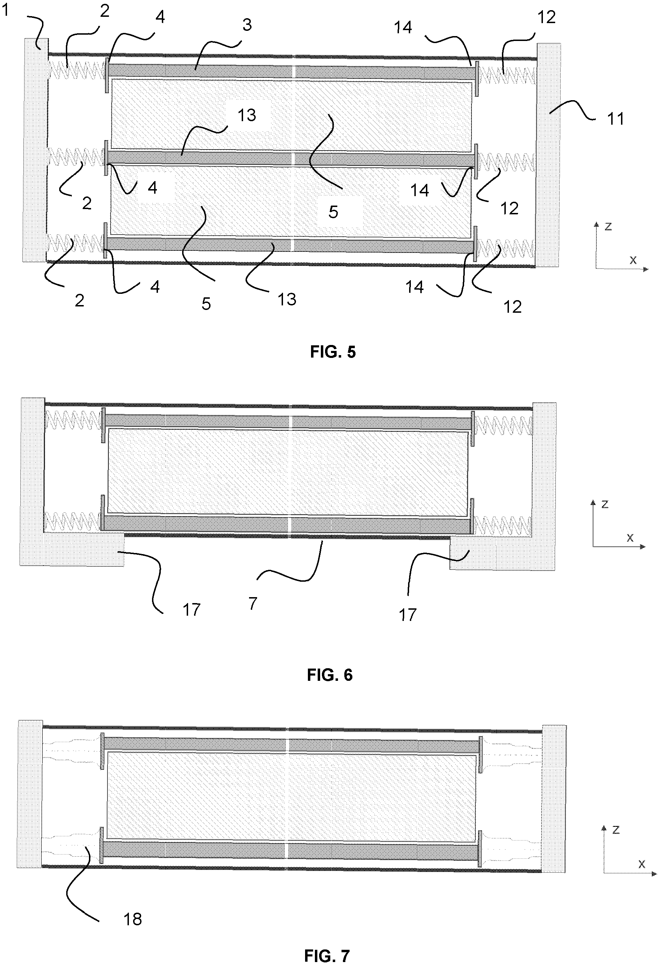

Fig. 5 illustrates as a side view the initial configuration without an impact whereby two separated storage units (5) are integrated. Beside the load paths above and below all storage units, there exist one further load path between both separately closed storage units.

Fig. 6 illustrates as a side view the initial configuration without an impact whereby the lateral rocker panels are designed as console supports (17) which are orientated into the center of the vehicle. The console supports of both vehicle sides are connected with an underbody sheet 6 and an underbody protection sheet 7.

Fig. 7 illustrates as a side view the initial configuration without an impact whereby the energy absorbing areas are designed using folding crumble boxes 18.

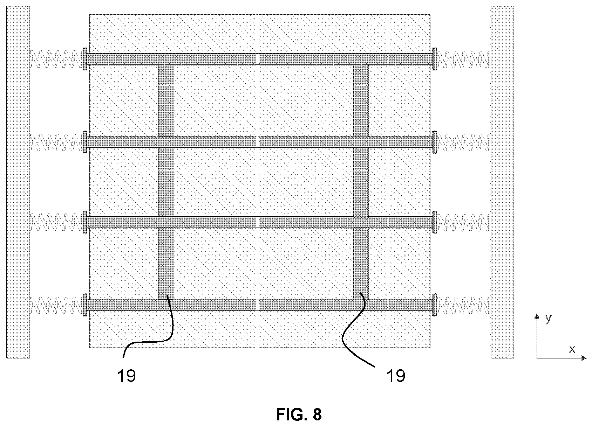

Fig. 8 illustrates as a top view the initial configuration without an impact whereby additional longitudinal members (19) are integrated into the EAS in the area of the movable bars with which they are fixedly joint. To avoid a buckling according to Euler, in fig. 8 two levels of longitudinal members are illustrated.

As can be understood from the examples described above, the system may include either one or a plurality load path elements.

INDUSTRIAL APPLICABILITY

The invention may be implemented in passenger vehicles such as automobiles, motorcycles etc. also including rickshaw as well as commercial vehicles like buses, trucks, vans, fork-lift trucks, pick-up trucks and agricultural vehicles, such as tractors, combined harvesters etc.

ACRONYMS LIST

EAS    Energy Absorbing System

REFERENCE SIGNS LIST

1    first rocker panel
2    first energy absorbing element
3    movable bar
4    first guiding element
5    storage unit
6    underbody sheet
7    underbody protection sheet
8    fixed joining point
9    battery module
10    impacting force
11    second rocker panel
12    second energy absorbing element
13    lower movable bar
14    second guiding element
15    space
16    impacted position
17    console support

18    crumple box

19    longitudinal members

**Claims**

1. An energy absorbing system for protecting a storage unit (5) of an alternative powertrain, said energy absorbing system comprising

   - a first rocker panel (1)
   - a first energy absorbing element (2),
   - a movable bar (3)
   - a first guiding element (4),
   - a second energy absorbing element (12),
   - a second guiding element (14) and
   - a second rocker panel (11),

   wherein

   - a first end of the first energy absorbing element (2), is fixed to an inner surface of the first rocker panel (1) and
   - a first end of the second energy absorbing element (12) is fixed to an inner surface of the second rocker panel (11),

   **characterized in that**

   - a second end of the first energy absorbing element (2), is fixed to the first guiding element (4), which is fixed to a first end of the movable bar (3)
   - a second end of said movable bar (3), is fixed to a second guiding element (14), which is fixed to a second end of the second energy absorbing element (12),
   - the movable bar (3) is connected to guiding elements (4, 14) configured to limit the movement of the movable bar to a linear movement between the rocker panels parallel to the axis of energy received from one of the energy absorbing elements (2, 12),
   - the energy absorbing systems (2, 12) are connected to guiding elements (4, 14) configured to limit the compression way of the energy absorbing systems, and
   - the rocker panels (1, 11) are set on opposite sides of the storage unit so that the inner surfaces of the rocker panels (1, 11) are set at a distance from the storage unit (5).

2. An energy absorbing system according to the claim 1, **characterized in that** the movable bar (3) is configured as a connector extending over the width of the storage unit (5) and attached to the first energy absorbing element (2) at its one end and to the second energy absorbing element (12) at its opposite end for transferring displacement from the first energy absorbing element (2) to the second energy absorbing element (12).

3. An energy absorbing system according to one of the claims 1 or 2, **characterized in that** the storage unit (5) is connected to at least one movable bar (3) so that the storage unit (5) and the bar (3) are configured to move as a unit.

4. An energy absorbing system according to the claim 3, **characterized in that** a guiding element (4, 14) is located between each energy absorbing element (2, 12) and the movable bar (3) whereby the guiding element (4, 14) is fixedly connected to the movable bar (3) and the energy absorbing element (2, 12) and the guiding element (4, 14) is configured to function as a guiding element (4, 14) for the storage unit (5) in the cross direction of the vehicle.

5. An energy absorbing system according to one of the claims above, **characterized in that** the system includes at least two, preferably a plurality of units formed of movable bar (3), energy absorbing elements (2, 12) and the guiding elements (4, 14), the units being placed at a distance from each other at least in one of the dimensions of the vehicle: longitudinal, horizontal.

6. An energy absorbing system according to the claims 1 or 2, **characterized in that** the movable bar (3), energy absorbing elements (2, 12) and the guiding elements (4, 14) bypass the storage unit (5) either below, above or both.

7. An energy absorbing system according to one of the claims above, **characterized in that** the energy absorbing elements (2, 12) are springs, preferably stainless-steel springs with a degressive spring rate.

8. An energy absorbing system according to one of the claims 1 - 6 above, **characterized in that** the energy absorbing elements (2, 12) are configured as a folding crumple box (18).

9. An energy absorbing system according to one of the claims above, **characterized in that** the energy absorbing elements (2, 12) are of corrosion-resistant and ductile stainless steel, preferably an austenitic stainless steel having in annealed condition an elongation A80 $\geq$ 45 %.

10. An energy absorbing system according to one of the claims above, **characterized in that** that the movable bar (3) is manufactured of a corrosion-resistant and high-strength stainless steel, preferably a temper-rolled or strain-hardened austenitic stainless steel having a yield strength level according to EN 10088-2 equal or higher than +CP500.

11. An energy absorbing system according to one of the claims above, **characterized in that** the yield strength ratio between the materials used for the movable bar (3) and the energy absorbing elements (2, 12) is $\geq$ 2.0, more preferably between $2.5 \leq RP0.2 \leq 3.5$.

12. An energy absorbing system according to one of the claims above, **characterized in that** the lateral rocker panels are designed as console support elements (17) orientated into the center of the vehicle to support in holding the weight force of the in vehicles cross direction moveable storage unit, whereby the console support elements are preferably connected with each other by an overlying sheet which is the underbody protection sheet (7).

13. An energy absorbing system according to one of the claims above, **characterized in** the movable bars (3) of the system are fixedly joint with each other by longitudinal members (19).

14. A method for protecting a storage unit (5) of an alternative powertrain by an energy absorbing system comprising:

> - a first rocker panel (1),
> - a first energy absorbing element (2),
> - a movable bar (3),
> - second energy absorbing element (12), and
> - a second rocker panel (11),

> wherein

> - a first end of the first energy absorbing element (2) is fixed to an inner surface of the first rocker panel (1),
> - a second end of the first energy absorbing element (2) is fixed to the movable bar (3),
> - a first end of the second energy absorbing element (12) is fixed to an inner surface of the second rocker panel (11),
> - a second end of said movable bar (3) is fixed to a second end of the second energy absorbing element (12), and
> - the rocker panels (1, 11) are set on opposite sides of the storage unit (5) so that the inner surfaces of the rocker panels (1, 11) are set at a distance from the storage unit (5),

> the method comprising

> - limiting, by a guiding element (4, 14), the movement of the movable bar (3) to a linear movement between the rocker panels (1, 11) parallel to the axis of energy received from one of the energy absorbing elements (2, 12), and
> - transferring displacement from the first energy absorbing element (2) to the second energy absorbing element (12) to connect the load on the first rocker panel (1) to an opposite panel (11).

15. Use of an energy absorbing system according to one of the claims 1 - 13 in a vehicle having a battery compartment or a hydrogen tank wherein the vehicle is a battery electric vehicle (BEV) or a fuel cell vehicle (FCV), or hybrid vehicle with battery or a hydrogen tank.

**Patentansprüche**

1. Energieabsorptionssystem zum Schützen einer Lagereinheit (5) eines alternativen Antriebsstrangs, wobei das Energieabsorptionssystem Folgendes umfasst

- ein erstes Schwellerpanel (1)
- ein erstes Energieabsorptionselement (2),
- eine bewegbare Stange (3)
- ein erstes Führungselement (4),
- ein zweites Energieabsorptionselement (12),
- ein zweites Führungselement (14) und
- ein zweites Schwellerpanel (11),

wobei

- ein erstes Ende des ersten Energieabsorptionselements (2) an einer inneren Oberfläche des ersten Schwellerpanels (1) befestigt ist und
- ein erstes Ende des zweiten Energieabsorptionselements (12) an einer inneren Oberfläche des zweiten Schwellerpanels (11) befestigt ist,

**dadurch gekennzeichnet, dass**

- ein zweites Ende des ersten Energieabsorptionselements (2) an dem ersten Führungselement (4) befestigt ist, das an einem ersten Ende der bewegbaren Stange (3) befestigt ist
- ein zweites Ende der bewegbaren Stange (3) an einem zweiten Führungselement (14) befestigt ist, das an einem zweiten Ende des zweiten Energieabsorptionselements (12) befestigt ist
- die bewegbare Stange (3) mit den Führungselementen (4, 14) verbunden ist, die dazu konfiguriert sind die Bewegung der bewegbaren Stange auf eine lineare Bewegung zwischen den Schwellerpanels parallel zu der Energieachse, die von einem der Energieabsorptionselemente (2, 12) empfangen wird, zu beschränken,
- die Energieabsorptionssysteme (2, 12) mit Führungselementen (4, 14) verbunden sind, die dazu konfiguriert sind, den Kompressionsweg der Energieabsorptionssysteme zu beschränken, und
- die Schwellerpanels (1, 11) an entgegengesetzten Seiten der Lagereinheit derart gesetzt sind, dass die inneren Oberflächen der Schwellerpanels (1, 11) in einem Abstand von der Lagereinheit (5) gesetzt sind.

2. Energieabsorptionssystem nach Anspruch 1, **dadurch gekennzeichnet, dass** die bewegbare Stange (3) als ein Verbinder konfiguriert ist, der sich über die Breite der Lagereinheit (5) erstreckt und an dem ersten Energieabsorptionselement (2) an seinem einen Ende und an dem zweiten Energieabsorptionselement (12) an seinem entgegengesetzten Ende zum Übertragen von Verschiebung von dem ersten Energieabsorptionselement (2) zu dem zweiten Energieabsorptionselement (12) angebracht ist.

3. Energieabsorptionssystem nach einem der Ansprüche 1 oder 2, **dadurch gekennzeichnet, dass** die Lagereinheit (5) mit mindestens einer bewegbaren Stange (3) derart verbunden ist, dass die Lagereinheit (5) und die Stange (3) zum Bewegen als eine Einheit konfiguriert sind.

4. Energieabsorptionssystem nach Anspruch 3, **dadurch gekennzeichnet, dass** sich ein Führungselement (4, 14) zwischen jedem Energieabsorptionselement (2, 12) und der beweglichen Stange (3) befindet, wodurch das Führungselement (4, 14) fest an der bewegbaren Stange (3) verbunden ist, und das Energieabsorptionselement (2, 12) und das Führungselement (4, 14) dazu konfiguriert sind, als ein Führungselement (4, 14) für die Lagereinheit (5) in der Querrichtung des Fahrzeugs zu funktionieren.

5. Energieabsorptionssystem nach einem der obigen Ansprüche, **dadurch gekennzeichnet, dass** das System mindestens zwei, bevorzugt eine Vielzahl von Einheiten beinhaltet, die aus einer bewegbaren Stange (3), Energieabsorptionselementen (2, 12) und den Führungselementen (4, 14) gebildet sind, wobei die Einheiten in einem Abstand voneinander mindestens in einer der Dimensionen des Fahrzeugs, längs, horizontal, platziert sind.

6. Energieabsorptionssystem nach den Ansprüchen 1 oder 2, **dadurch gekennzeichnet, dass** die bewegbare Stange (3), Energieabsorptionselemente (2, 12) und die Führungselemente (4, 14) die Lagereinheit (5) entweder darunter, darüber oder darunter und darüber umgehen.

7. Energieabsorptionssystem nach einem der obigen Ansprüche, **dadurch gekennzeichnet, dass** die Energieabsorptionselemente (2, 12) Federn sind, bevorzugt Federn aus rostfreiem Stahl mit einer degressiven Federkonstante.

8. Energieabsorptionssystem nach einem der obigen Ansprüche 1 - 6, **dadurch gekennzeichnet, dass** die Energieabsorptionselemente (2, 12) als eine Faltknautschbox (18) konfiguriert sind.

9. Energieabsorptionssystem nach einem der obigen Ansprüche, **dadurch gekennzeichnet, dass** die Energieabsorptionselemente (2, 12) aus korosionsbeständigem und duktilem rostfreien Stahl, bevorzugt einem austenitischen rostfreien Stahl hergestellt sind, der im gekühlten Zustand eine Dehnung von A80 $\geq$ 45 % aufweist.

10. Energieabsorptionssystem nach einem der obigen Ansprüche, **dadurch gekennzeichnet, dass** die bewegbare Stange (3) aus einem korosionsbeständigen und hochfesten rostfreien Stahl, einem anlassgewalzten oder kaltverfestigten austenitischen rostfreien Stahl mit einer Streckgrenze nach EN 10088-2 gleich oder höher als +CP500, hergestellt ist.

11. Energieabsorptionssystem nach einem der obigen Ansprüche, **dadurch gekennzeichnet, dass** das Streckgrenzenverhältnis zwischen den Materialien, die für die bewegbare Stange (3) verwendet werden, und den Energieabsorp-tionselementen (2, 12) $\geq$ 2,0, bevorzugt zwischen 2,5 $\leq$ RP0,2 $\leq$ 3,5 beträgt.

12. Energieabsorptionssystem nach einem der obigen Ansprüche, **dadurch gekennzeichnet, dass** die seitlichen Schwellerpanels als Konsolenträgerelemente (17) ausgelegt sind, die in der Mitte des Fahrzeugs ausgerichtet sind, um beim Aufnehmen der Gewichtskraft der in Fahrzeugquerrichtung bewegbaren Lagereinheit zu tragen, wodurch die Konsolenträgerelemente bevorzugt miteinander durch ein darüber liegendes Blech verbunden sind, das das Unterbodenschutzblech (7) ist.

13. Energieabsorptionssystem nach einem der obigen Ansprüche, **dadurch gekennzeichnet, dass** die bewegbaren Stangen (3) des Systems fest miteinander durch Längselemente (19) verbunden sind.

14. Verfahren zum Schützen einer Lagereinheit (5) eines alternativen Antriebsstrangs durch ein Energieabsorptionssystem, das Folgendes umfasst:

  - ein erstes Schwellerpanel (1),
  - ein erstes Energieabsorptionselement (2),
  - eine bewegbare Stange (3),
  - ein zweites Energieabsorptionselement (12), und
  - ein zweites Schwellerpanel (11),

wobei

  - ein erstes Ende des ersten Energieabsorptionselements (2) an einer inneren Oberfläche des ersten Schwellerpanels (1) befestigt ist,
  - ein zweites Ende des ersten Energieabsorptionselements (2) an der bewegbaren Stange (3) befestigt ist,
  - ein erstes Ende des zweiten Energieabsorptionselements (12) an einer inneren Oberfläche des zweiten Schwellerpanels (11) befestigt ist,
  - ein zweites Ende der bewegbaren Stange (3) an einem zweiten Ende des zweiten Energieabsorptionselement (12) befestigt ist, und
  - die Schwellerpanels (1, 11) an entgegengesetzten Seiten der Lagereinheit (5) derart gesetzt sind, dass die inneren Oberflächen der Schwellerpanels (1, 11) in einem Abstand von der Lagereinheit (5) gesetzt sind,

wobei das Verfahren Folgendes umfasst

  - Beschränken der Bewegung der bewegbaren Stange (3) durch ein Führungselement (4, 14) auf eine lineare Bewegung zwischen den Schwellerpanels (1, 11) parallel zu der Energieachse, die von einem der Energieabsorptionselemente (2, 12) empfangen wird, und
  - Transferieren der Verschiebung von dem ersten Energieabsorptionselement (2) auf das zweite Energieabsorptionselement (12), um die Last an dem ersten Schwellerpanel (1) mit einem entgegengesetzten Panel (11) zu verbinden.

15. Verwendung eines Energieabsorptionssystem nach einem der Ansprüche 1 - 13 in einem Fahrzeug, das ein Batteriefach oder einen Wasserstofftank aufweist, wobei das Fahrzeug ein batterieelektrisches Fahrzeug (BEV) oder ein Brennstoffzellenfahrzeug (FCV) oder ein Hybridfahrzeug mit Batterie oder Wasserstofftank ist.

**Revendications**

1. Système d'absorption d'énergie destiné à protéger une unité de stockage (5) d'un groupe motopropulseur alternatif, ledit système d'absorption d'énergie comprenant :

   - un premier panneau de bas de caisse (1)
   - un premier élément d'absorption d'énergie (2)
   - une barre mobile (3)
   - un premier élément de guidage (4)
   - un deuxième élément d'absorption d'énergie (12)
   - un deuxième élément de guidage (14) et
   - un deuxième panneau de bas de caisse (11).

   dans lequel

   - une première extrémité du premier élément d'absorption d'énergie (2) est fixée à une surface intérieure du premier panneau de bas de caisse (1) et
   - une première extrémité du deuxième élément d'absorption d'énergie (12) est fixée à une surface intérieure du deuxième panneau de bas de caisse (11),

   **caractérisé en ce que** :

   - une deuxième extrémité du premier élément d'absorption d'énergie (2) est fixée au premier élément de guidage (4), qui est fixé à la première extrémité de la barre mobile (3),
   - une deuxième extrémité de ladite barre mobile (3) est fixée à un deuxième élément de guidage (14), qui est fixé à une deuxième extrémité du deuxième élément d'absorption d'énergie (12),
   - la barre mobile (3) est raccordée à des éléments de guidage (4, 14) configurés pour limiter le mouvement de la barre mobile à un mouvement linéaire entre les panneaux de bas de caisse parallèles à l'axe d'énergie reçue par un des éléments d'absorption d'énergie (2, 12).
   - les systèmes d'absorption d'énergie (2, 12) sont raccordés à des éléments de guidage (4, 14) configurés pour limiter la compression des systèmes d'absorption d'énergie et
   - les panneaux de bas de caisse (1, 11) sont disposés sur des côtés opposés de l'unité de stockage, de sorte que les surfaces intérieures (1, 11) des panneaux de bas de caisse soient espacées de l'unité de stockage (5).

2. Système d'absorption d'énergie selon la revendication 1, **caractérisé en ce que** la barre mobile (3) est configurée comme un connecteur s'étendant sur la largeur de l'unité de stockage (5) et fixée au premier élément d'absorption d'énergie (2) à une extrémité et au deuxième élément d'absorption d'énergie (12) à son extrémité opposée, afin de transférer le déplacement du premier élément d'absorption d'énergie (2) au deuxième élément d'absorption d'énergie (12).

3. Système d'absorption d'énergie selon une des revendications 1 ou 2, **caractérisé en ce que** l'unité de stockage (5) est raccordée à au moins une barre mobile (3), de sorte que l'unité de stockage (5) et la barre (3) soient configurées pour se déplacer conjointement.

4. Système d'absorption d'énergie selon la revendication 3, **caractérisé en ce qu'**un élément de guidage (4, 14) est situé entre chaque élément d'absorption d'énergie (2, 12) et la barre mobile (3), moyennant quoi l'élément de guidage (4, 14) est raccordé fixement à la barre mobile (3) et à l'élément d'absorption d'énergie (2, 12). L'élément de guidage (4, 14) est configuré pour servir d'élément de guidage (4, 14) pour l'unité de stockage (5) dans le sens transversal du véhicule.

5. Système d'absorption d'énergie selon une des revendications précédentes, **caractérisé en ce qu'**il comprend au moins deux, de préférence plusieurs unités, constituées de la barre mobile (3), des éléments d'absorption d'énergie (2, 12) et des éléments de guidage (4, 14), les unités étant espacées les unes des autres dans au moins une des dimensions du véhicule : longitudinale, horizontale.

6. Système d'absorption d'énergie selon les revendications 1 ou 2, **caractérisé en ce que** la barre mobile (3), les éléments d'absorption d'énergie (2, 12) et les éléments de guidage (4, 14) contournent l'unité de stockage (5) par le dessous, par le dessus ou les deux.

7.  Système d'absorption d'énergie selon une des revendications précédentes, **caractérisé en ce que** les éléments d'absorption d'énergie (2, 12) sont des ressorts, de préférence en acier inoxydable à raideur dégressive.

8.  Système d'absorption d'énergie selon une des revendications 1 à 6, **caractérisé en ce que** les éléments d'absorption d'énergie (2, 12) sont configurés comme une boîte de déformation pliable (18).

9.  Système d'absorption d'énergie selon une des revendications précédentes, **caractérisé en ce que** les éléments d'absorption d'énergie (2, 12) sont en acier inoxydable ductile et résistant à la corrosion, de préférence un acier inoxydable austénitique présentant à l'état recuit un allongement A80 ≥ 45 %.

10. Système d'absorption d'énergie selon une des revendications précédentes, **caractérisé en ce que** la barre mobile (3) est fabriquée en acier inoxydable résistant à la corrosion et à haute résistance, de préférence un acier inoxydable austénitique laminé à chaud ou écroui présentant une limite d'élasticité selon la norme EN 10088-2 égale ou supérieure à +CP500.

11. Système d'absorption d'énergie selon une des revendications précédentes, **caractérisé en ce que** le rapport de limite d'élasticité entre les matériaux utilisés pour la barre mobile (3) et les éléments d'absorption d'énergie (2, 12) est ≥ 2,0, de préférence compris entre 2,5 ≤ RP0.2 ≤ 3,5.

12. Système d'absorption d'énergie selon une des revendications précédentes, **caractérisé en ce que** les panneaux de bas de caisse latéraux sont conçus comme des éléments de support de console (17) orientés vers le centre du véhicule pour supporter la force de poids de l'unité de stockage mobile transversalement au véhicule, moyennant quoi les éléments de support de console sont de préférence raccordés les uns aux autres par une tôle de recouvrement qui est la tôle de protection de soubassement (7).

13. Système d'absorption d'énergie selon une des revendications précédentes, **caractérisé en ce que** les barres mobiles (3) du système sont raccordées les unes aux autres par des longerons (19).

14. Procédé de protection d'une unité de stockage (5) d'un groupe motopropulseur alternatif par un système d'absorption d'énergie comprenant :

    - un premier panneau de bas de caisse (1),
    - un premier élément d'absorption d'énergie (2),
    - une barre mobile (3),
    - un deuxième élément d'absorption d'énergie (12), et
    - un deuxième panneau de bas de caisse (11),

    dans lequel

    - une première extrémité du premier élément d'absorption d'énergie (2) est fixée à une surface intérieure du premier panneau de bas de caisse (1),
    - une deuxième extrémité du premier élément d'absorption d'énergie (2) est fixée à la barre mobile (3),
    - une première extrémité du deuxième élément d'absorption d'énergie (12) est fixée à une surface intérieure du deuxième panneau de bas de caisse (11),
    - une deuxième extrémité de ladite barre mobile (3) est fixée à une deuxième extrémité du deuxième élément d'absorption d'énergie (12), et
    - les panneaux de bas de caisse (1, 11) sont disposés sur des côtés opposés de l'unité de stockage (5) de sorte que les surfaces intérieures des panneaux de bas de caisse (1, 11) soient espacées de l'unité de stockage (5).

    le procédé comprenant :

    - la limitation, par un élément de guidage (4, 14), du mouvement de la barre mobile (3) à un mouvement linéaire entre les panneaux de bas de caisse (1, 11) parallèles à l'axe de l'énergie reçue d'un des éléments d'absorption d'énergie (2, 12), et
    - le transfert du déplacement du premier élément d'absorption d'énergie (2) au deuxième élément d'absorption d'énergie (12) afin de relier la charge du premier panneau de bas de caisse (1) à un panneau opposé (11).

15. Utilisation d'un système d'absorption d'énergie selon une des revendications 1 à 13 dans un véhicule équipé d'un compartiment de batterie ou d'un réservoir d'hydrogène, dans lequel le véhicule est un véhicule électrique à batterie (BEV) ou un véhicule à pile à combustible (FCV) ou un véhicule hybride avec batterie ou réservoir d'hydrogène.

EP 4 410 579 B1

FIG. 1

FIG. 2

15

**FIG. 3**

**FIG. 4**

FIG. 5

FIG. 6

FIG. 7

**FIG. 8**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2565958 B1
- DE 102009035492 A1
- US 2016068195 A1
- WO 2017012850 A1
- US 2015239331 A1
- US 2017029034 A1
- US 2016233468 A1
- US 2016229308 A1
- CN 111845602 A

- WO 2021004497 A1
- CN 211617626 U
- CN 211621342 U
- CN 111725456 A
- US 2019047628 A1
- US 2016257346 A1
- US 9868361 B2
- US 2020262491 A1